# EUROPEAN PATENT SPECIFICATION

(11) **EP 4 505 485 B1**
(45) Date of publication and mention of the grant of the patent: **15.04.2026**
(21) Application number: 23715543.7
(22) Date of filing: 31.03.2023
(51) Int. Cl.: H01F 6/06

(54) **MODULAR MAGNETIC CONFINEMENT DEVICE**
MODULARE MAGNETISCHE EINGRENZUNGSVORRICHTUNG
DISPOSITIF DE CONFINEMENT MAGNÉTIQUE MODULAIRE

(30) Priority: 04.04.2022 EP 22305437; 04.04.2022 EP 22305446
(43) Date of publication of application: 12.02.2025
(73) Proprietor: Renaissance Fusion, 38600 Fontaine (FR)
(72) Inventor: VOLPE, Francesco, 38600 Fontaine (FR)
(74) Representative: Cabinet Beaumont
(86) International application number: PCT/EP2023/058474
(87) International publication number: WO 2023/194227

(56) References cited:
- WO-A1-2021/195383
- WO-A2-2020/201540
- GB-A- 2 562 385

## Description

This application is based on and claims the priority benefit of European patent application number 22305446, filed on April 4, 2022, entitled "MODULAR MAGNETIC CONFINEMENT DEVICE," and of European patent application number 22305437, filed on April 4, 2022, entitled "METHOD FOR MANUFACTURING SUPERCONDUCTING COILS AND DEVICE" .

### Technical field

Disclosed herein is a modular device for confinement of magnetic fields. Specifically, the modular magnetic confinement device described is related to containment of plasma and its applications including generation of energy in fusion reactors.

### Background art

The modern world is in dire need of new energy sources. Energy sources that are not only clean but easily renewable and highly available. Fusion energy obtained from fusion reactions in a fusion reactor is an energy source with all of these characteristics.

Presently, the prospect of reliable and widely available fusion energy is yet to be fulfilled. Among the biggest obstacles to achieving fusion energy is the construction of a fusion reactor. Construction of a fusion reactor requires careful selection of materials, complex geometries for magnetic confinement and careful considerations regarding the extraction of produced energy.

Many different geometries for magnetic confinement can be identified in the art including Tokamaks, Spherical Tokamaks, Spheromaks and Stellarators, each having their own benefits and difficulties. From an engineering perspective, all of these geometries share the same complication, that they all have to be achieved by a volumetric construction. It is not known in the art any possible way to achieve feasible geometries without constructing magnets in three dimensions.

A fusion reactor is described in U.S. Pat. No. 9,959,942 to McGuire. The device described by McGuire is compact, able to fit inside airplanes and even large cars, yet the device as described exemplifies two big engineering challenges that still require a solution. First, although the device is small it requires a large amount of parts, a realization of any of the embodiments described would require many more parts than those of a car or even an airplane. Second, a large number of different coils and coil arrangements are required to achieve magnetic encapsulation, which is just another term for magnetic confinement.

With respect to the coils, the prior art teaches several methods for constructing one, for instance the superconducting coil described in U.S. Pat. No. 8,655,423 to Miyazaki, et al. Miyazaki describes a superconducting coil formed of several layers of different materials. A group of these layers is described as constituting a superconducting coil portion which is formed of thin-film superconducting wires. The coils described by Miyazaki and those that are common in the art are constructed by arranging superconducting films, also called superconducting tapes, into the shape of wires and the wires are then further configured into the shape of coils. According to a review of the prior art, superconducting coils are formed by stacking superconducting films or layers so that electric current may flow in a desired direction and produce the appropriate magnetic field configuration. To the best knowledge and understanding of the inventors, the prior art doesn't teach any other method by which the superconducting films or tapes may be used to conduct a current.

Further attention is drawn to WO 2021/195383 A1 which discloses a magnet comprising: a plurality of plates arranged in a stack that includes a first plate, the first plate comprising: a conducting channel on a first side of the first plate, at least part of the conducting channel being arranged in a spiral path, the conducting channel comprising a high temperature superconductor (HTS) material and a conductive material; and a plurality of cooling channels on a second side of the first plate, the second side opposing the first side.

Document GB 2 562 385 A relates to a superconducting magnet for producing part of a substantially toroidal field in a device, the magnet comprising: one or more first conductors, each first conductor comprising a first superconductor; one or more second conductors, each second conductor comprising a second, different superconductor; and a set of joints, each of the joints connecting a first conductor and a second conductor to form a series of conductors corresponding to at least part of a winding of the magnet and comprising alternating first and second conductors; wherein each first conductor passes through a midplane of the toroidal field at a smaller distance from an axis of rotation of the toroidal field than does each second conductor.

Superconducting tapes themselves are also in short supply, as their demand is high. There is also the problem of the size and shape of the tapes which can only be constructed a few centimeters wide. In addition, the process that arranges the tapes into wires and further into coils is lengthy and error prone. The field of fusion reactor manufacturing requires a solution that is cheaper, faster, and more reliable.

Thus, there remains a need for a magnetic confinement device that can have different geometries, without requiring a too large number of parts, different coils and coils arrangements. There remains also a need for a simpler, faster and less error prone method for constructing a magnetic confinement device.

### Summary of Invention

One embodiment addresses all or some of the drawbacks of known magnetic confinement devices and coils.

The invention as set forth in claim 1 is directed to a magnetic confinement device comprising a plurality of modules coupled to each other, wherein each module is adapted to conduct current in order to form a magnetic field and has:
- a first wall having a connecting surface adapted to engage a connecting surface of another module of the plurality of modules; and
- a groove separating the first wall into at least two different electrically conducting regions.

In one embodiment, the groove of at least one of the plurality of modules is adapted to be connected to a groove of another module of the plurality of modules to form a continuous groove.

In one embodiment, the groove is adapted to guide a flow of current into a certain direction, or into different paths, through the module.

In one embodiment, at least a module of the plurality of modules is mechanically and/or electrically coupled to another module of the plurality of modules, the connecting surface of the module comprising a mechanical and/or electrical connector adapted to be coupled to a mechanical and/or electrical connector of the other module.

In one embodiment, the coupled modules comprise each an electrical connector, the electrical connectors being positioned in order to accommodate a flow of current between said coupled modules.

In one embodiment, the at least one module and the other module comprise each an electrical connector, the electrical connectors being positioned in order to accommodate a flow of current between said modules.

In one embodiment, at least a module of the plurality of modules comprises at least a channel crossing through the first wall of said module, for example to enable a cooling fluid, like nitrogen or helium, to flow through said module.

In one particular embodiment, each channel is adapted to form a single channel with a channel of another module of the plurality of modules.

According to claim 1, each module of the plurality of modules comprises a second wall assembled to the first wall, the groove of said module being positioned between the first wall and the second wall.

In one embodiment, the plurality of modules comprises first modules having a first shape, and second modules having a second shape, wherein the modules are mechanically coupled to each other, and the first modules are electrically coupled to each other and/or the second modules are electrically coupled to each other.

In one particular embodiment, the first and second modules are electrically coupled to each other.

In one embodiment, the direction and/or the intensity of the current flowing through the first modules and/or the second modules determines the shape of the magnetic field in the magnetic confinement device.

In one embodiment, the modules are arranged in a shape of a torus.

In one embodiment, the modules are constructed to exhibit superconducting characteristics.

According to claim 1, each module of the plurality of modules is constructed as a stacking of different materials, comprising at least a superconducting layer comprising a superconducting material, like yttrium barium copper oxide or rare-earth barium copper oxide, wherein the groove of said module is patterned at least in the superconducting layer.

In one embodiment, the stacking comprises:
- a structural layer, for example composed or covered by a material like Hastelloy;
- a plurality of buffer layers on the structural layer;
- the superconducting layer on the plurality of buffer layers;
wherein the groove is patterned in the buffer layers and the superconducting layer.

In one embodiment, the stacking comprises:
- a structural layer, for example composed or covered by a material like Hastelloy;
- a plurality of buffer layers on the structural layer;
- the superconducting layer on the plurality of buffer layers;
   and
- a shunt layer on the superconducting layer and in the groove, the shunt layer being made of a metal, for example silver;
wherein the groove is patterned in the buffer layers and the superconducting layer.

In one embodiment, the stacking comprises a repeater layer under the shunt layer, the repeater layer being made of the repetition of the buffer and superconducting layers, and preferably several repetitions, for example between 4 and 80 repetitions, the groove being patterned in the buffer layers, the superconducting layer and the repeater layer.

In one embodiment, the stacking comprises another superconducting layer, for example a non-perforated and non-grooved layer, on the shunt layer, the other superconducting layer comprising a superconducting material like yttrium barium copper oxide or rare-earth barium copper oxide.

In one embodiment, each channel of the at least one module goes through the structural layer.

One embodiment provides a module adapted to the magnetic confinement device according to a previous defined embodiment.

Claim 19 is directed to a module which is one of the plurality of modules configured to be coupled to each other to form the magnetic confinement device according to one of claims 1 to 18.

### Advantages

Advantages of an embodiment of the modular magnetic confinement device may be listed as: simpler and less error prone construction of different modules allowing for faster assembly; high confinement of the magnetic field, due to Meissner effect layers; servicing of each module is easier and replacement faster, accounting for cheaper device and a reduction of overall costs; coils may be easily changed and replaced, allowing not only for maintenance of the device but also for testing. Other technical advantages will become apparent to someone skilled in the art from the detailed description, figures, and claims. Moreover, while specific advantages have been enumerated above, different embodiments may include all, none or some of the advantages listed.

### Brief description of drawings

The foregoing features and advantages, as well as others, will be described in detail in the following description of specific embodiments given by way of illustration and not limitation with reference to the accompanying drawings, in which:
FIG. 1 is a general perspective view of an embodiment of the disclosed modular magnetic confinement device.
FIG. 2 is an exploded perspective view of an embodiment of the disclosed modular magnetic confinement device.
FIG. 3A is a perspective view of a toroidal device constructed out of modules as described by the disclosed modular magnetic confinement device.
FIG. 3B is an expanded perspective view of two modules that comprise the toroidal device of FIG. 3A.
FIG. 3C is a perspective view of the interior of the toroidal device of FIG. 3A.
FIG. 4 is a perspective view of the interior of the wall of a module of the disclosed modular magnetic confinement device.

### Description of embodiments

Like features have been designated by like references in the various figures. In particular, the structural and/or functional features that are common among the various embodiments may have the same references and may dispose identical structural, dimensional and material properties.

For the sake of clarity, only the operations and elements that are useful for an understanding of the embodiments described herein have been illustrated and described in detail.

Unless indicated otherwise, when reference is made to two elements connected together, this signifies a direct connection without any intermediate elements other than conductors, and when reference is made to two elements coupled together, this signifies that these two elements can be connected or they can be coupled via one or more other elements.

In the following disclosure, unless indicated otherwise, when reference is made to absolute positional qualifiers, such as the terms "front", "back", "top", "bottom", "left", "right", etc., or to relative positional qualifiers, such as the terms "above", "below", "higher", "lower", etc., or to qualifiers of orientation, such as "horizontal", "vertical", etc., reference is made to the orientation shown in the figures.

Unless specified otherwise, the expressions "around", "approximately", "substantially" and "in the order of" signify within 10 %, and preferably within 5 %.

When reference is made to a magnetic confinement, it refers to the confinement of the magnetic field.

The figures are not to scale. It should be noted that the drawings refer to an embodiment of the disclosed modular magnetic confinement device, sometimes also referred simply as device, when no ambiguity is anticipated. Other embodiments may be possible, as someone with appropriate training may readily appreciate. The actual dimension and/or shape of each of the components of the embodiment may vary. Only important details of the embodiment are shown, however one of ordinary skill in the art can appreciate how the overall device may be constructed, without undue experimentation. Some details have been omitted from the drawings, but the inventors believe that adding these details is unnecessary for the overall appreciation of the characteristics of the invention disclosed. These omitted details include, among others, elements for holding or fixing the device or its functional components. Some characteristics of the embodiment appear exaggerated to facilitate understanding. The embodiments disclosed, and alternatives observed should not be considered as limiting the invention as set forth in the claims in any way.

The magnetic confinement device is constructed from modules. The modules are coupled, preferably connected, to each other and are able to conduct electricity. The conduction of electricity in the module and the materials used for this end may require that the module operates at certain temperatures, thus the modules may require cooling.

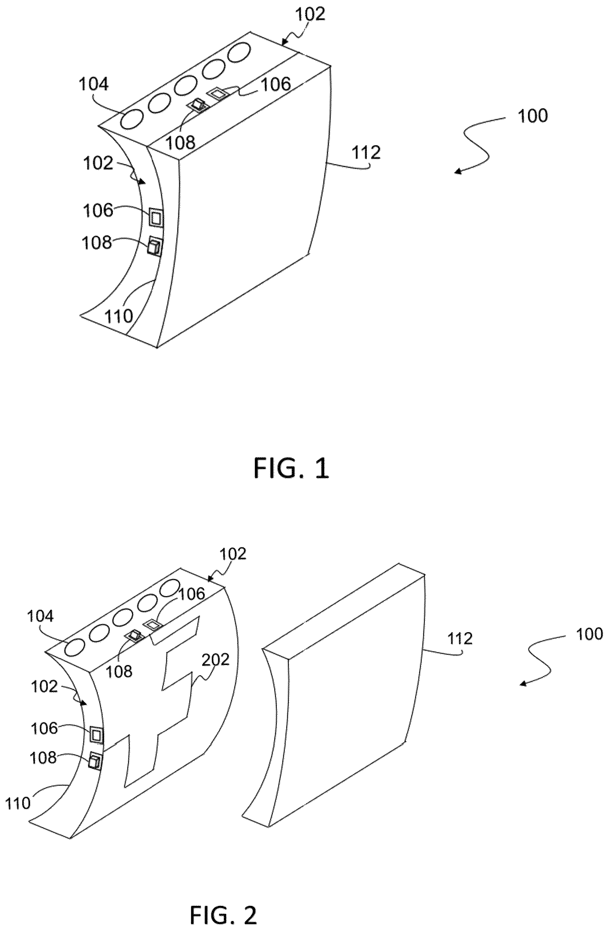

An embodiment of a module **100** of the modular magnetic confinement device is shown in FIG. 1. The module conducts electricity, so that it may form an electromagnetic field. The module has an outer wall **112** and an inner wall **110.** The inner wall **110** has at least a connecting surface **102,** two connecting surfaces in the shown embodiment. A least one tube, canal or channel, or, as in the illustrated module, several tubes, canals, or channels **104** may cross through the inner wall **110.** The connecting surfaces of the inner wall **110** have electrical connectors **106** and/or mechanical connectors **108.**

When reference is made to a channel, this also includes a tube, a tunnel or a canal.

The inner wall may be called the "first wall", and the outer wall may be called the "second wall".

The outer wall **112** may be electrically conducting, as it may represent a shunt layer, or electrically isolating, or a poor conductor.

An expanded view of the module **100** is shown in FIG. 2. In this expanded view, the outer wall **112,** has been separated from the inner wall **110.** The inner wall **110** has a ridge, wedge or groove **202.** The groove **202** separates the inner wall **110** in at least two electrically conductive regions, so that current may flow in a certain direction, or different paths, according to the needs of the specific use. The electrical connectors **106** are positioned to accommodate the flow of current to other modules.

When reference is made to a groove, this also includes a ridge or a wedge.

According to an embodiment, a mechanical connector can also function as an electrical connector. Similarly, an electrical connector can also function as a mechanical connector. A connecting surface may comprise one connector allowing for both mechanical and electrical connection. Preferably, there is an electrical connector connecting each conductive region from either side of the groove.

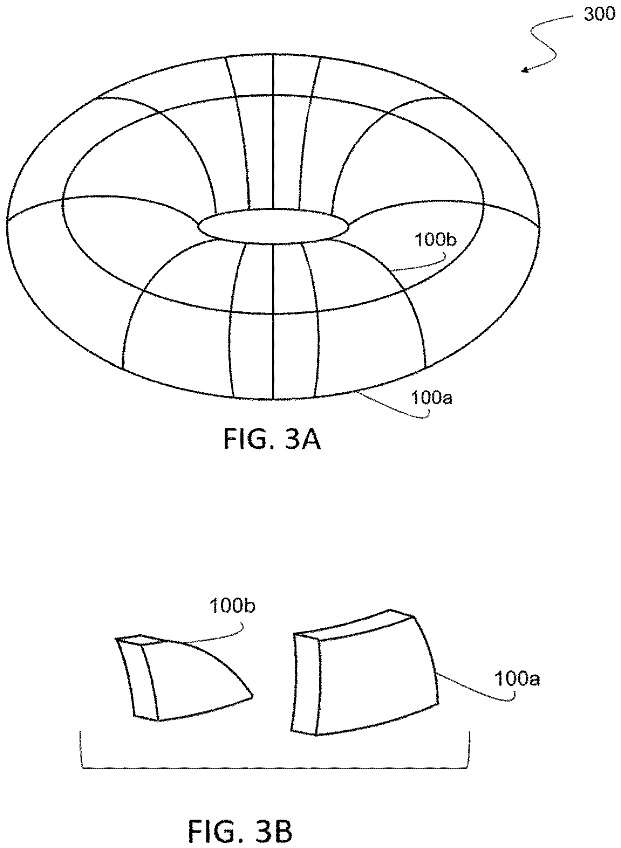

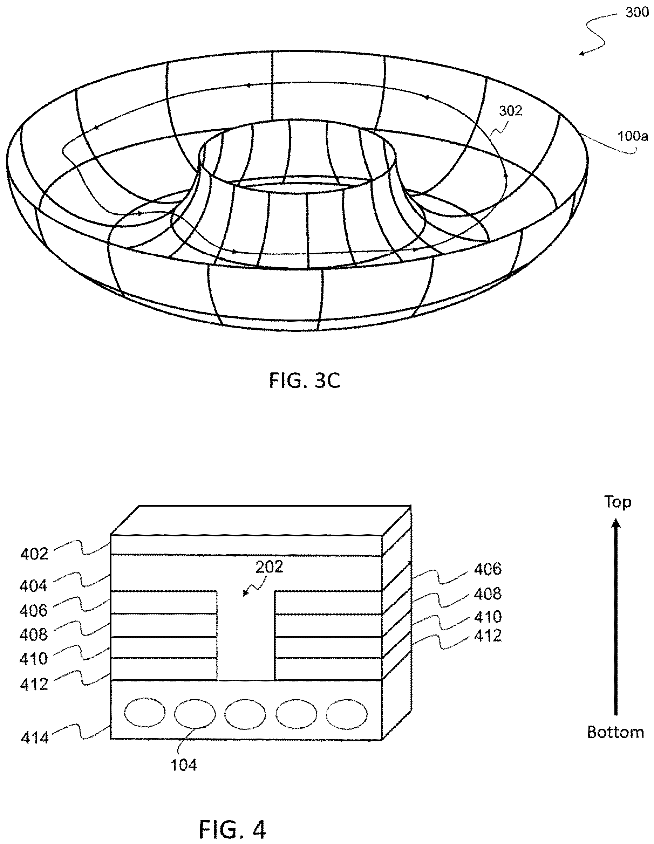

The modules are assembled into a device that is adapted to confine a magnetic field. They are assembled together with the mechanical connectors **108.** In an embodiment, the device may be described as a torus **300,** as shown in FIG. 3A. In order to construct the torus **300** out of the modules, different module shapes may be used. As shown in FIG. 3B, an upper module **100b** is separate from a lower module **100a.** Electrically, the modules may be coupled, preferably connected, together by using the electrical connectors **106.** When these modules are coupled together, electrical current may flow from one to the other, resulting in the formation of a magnetic field **302** around the modules, as shown in FIG. 3C. Any number of modules may connect to each other and virtually, the magnetic confinement device may be of any shape.

A lower module may be called a "first module" and an upper module may be called a "second module".

### Example of operation

FIG. 3C shows an interior view of the torus **300** during operation. The lower modules **100a** are electrically interconnected. They may also be interconnected with other modules, like the upper modules **100b** in FIG. 3B. Electricity is flowing through the modules and this results in the formation of a magnetic field **302** inside the torus **300.** The shape of the magnetic field **302** may be configured by changing the direction and intensity of the current flowing through the lower modules **100a** or the upper modules **100b.**

In order for the magnetic field **302** to be confined to the interior of the magnetic confinement device, be it in the torus **300** configuration or other, the construction of the modules may make at least partially use of the Meisner effect. The Meisner effect is the phenomenon by which magnetic fields may not exist inside perfect conductors, or superconductors. The Meisner effect is observed in superconducting materials. For certain materials, to exhibit superconducting properties, it is necessary that they operate inside certain temperature limits. In order to ensure that the module operates inside this temperature range, cooling fluid may be made to flow through the channels **104.**

### Example of module construction

An embodiment of the inner structure of the modules is shown in FIG. 4. A module may be constructed as a stacking of several layers. From the bottom, which may be closest to the side the magnetic field will be formed on, the stacking comprises a first structural layer **414,** which may be composed or covered by a material like Hastelloy. The channels **104** for the cooling fluid may go through the first structural layer **414.** Several buffer layers are deposited on top of the first structural layer **414.** Sputtered on top of the first structural layer **414** is a layer of a material like alumina, called the first buffer layer **412.** The second buffer layer **410** is sputtered on top of the first buffer layer **412.** The second buffer layer **410** is composed of a material like yttria. The third buffer layer **408** is composed of a material like magnesium oxide and may be deposited by metal-organic chemical vapor deposition (MOCVD) or ion beam assisted deposition (IBAD). A superconducting layer **406** is deposited on top of the third buffer layer **408.** The superconducting layer **406** may be deposited by MOCVD and may be composed of a material like REBCO or YBCO or other appropriate superconducting materials. Material from the first buffer layer **412,** the second buffer layer **410,** the third buffer layer **408** and the superconducting layer **406** may be removed in order to create a pattern which describes the groove **202** in the inner wall **110** of the module as shown in FIG. 2. In order to remove the material, a technique like laser patterning may be used. Other techniques, like a mechanical technique or photolithography may be used to remove the material.

Alternatively, it is possible to remove material only from the superconducting layer **406** to create the groove **202.**

The buffer layers may form an appropriate template for the formation of the superconducting layer. There may be only one buffer layer instead of a plurality of buffer layers.

Other appropriate materials may be used in place of the ones described here.

The groove **202** may be filled with a metal, which may be silver, forming a shunt layer **404** that may also cover the superconducting layer **406.** Such a shunt layer offers a path in case of quenching of the superconducting layer **406.** The shunt layer **404** is optional. There are other solutions to address the quenching problem, such as operating at low enough current, temperature and/or magnetic field. Quenching is a problem for superconductivity in general, which is not linked to the problem addressed by the embodiments.

Before forming the groove, the described sequence of buffer and superconducting layers may be repeated several times (forming a repeater layer), with best results being achieved between 4 and 80 of the layer sequence, for example between 20 and 40 repetitions of the layer sequence for magnetic fields of about 10 Tesla. The groove may also be formed in the repeater layer.

For example, the depth of the groove **202** is comprised between 3 and 5 µm for one sequence of buffer and superconducting layers. If the sequence is repeated, the depth of the groove may be multiplied by the number of sequences. For example, the depth of the groove is comprised between 3xN and 5xN µm, where N is the number of sequences.

The repeated layer sequence may comprise a silver layer on the superconducting layer **406,** or another material which is appropriate for the formation of another sequence of buffer and superconducting layers on said stacking.

To make at least partially use of the Meisner effect or similar effect in which the superconductor partly or fully expels magnetic field, on top of all the other layers, a single, preferably non-perforated (and not-grooved), layer of superconducting material should be placed. This layer is the Meisner effect layer **402** and is composed of a superconducting material like YBCO or REBCO.

Layers of other materials either above or below the ones described may be required for the proper operation of the device, nevertheless it should be apparent to anyone with ordinary skill in the art how to achieve the functionality described here with a different layer configuration. As an example of this, stabilizing layers composed of silver, copper and other metals may be placed below the first structural layer **414.**

The inner wall **110** may include layers **414, 412, 410, 408, 406, 404** and the groove **202** of FIG. 4, and the outer wall **112** may include layer **402** of FIG. 4.

According to an embodiment, the module is a modular coil.

Other layer configurations and/or methods for constructing or manufacturing a module, for example a modular coil, should be apparent to anyone with ordinary skill in the art. Another example of a method for manufacturing superconducting coils, which can be modular coils, and an example of device is given in European patent application number EP22305437, filed on April 4, 2022 by the same applicant "RENAISSANCE FUSION", entitled "METHOD FOR MANUFACTURING SUPERCONDUCTING COILS AND DEVICE", which is published as EP4258298A1.

Other embodiments can also be understood from the entirety of the specification as well as the claims filed herein.

Various embodiments and variants have been described. Those skilled in the art will understand that certain features of these embodiments can be combined and other variants will readily occur to those skilled in the art.

Finally, the practical implementation of the embodiments and variants described herein is within the capabilities of those skilled in the art based on the functional description provided hereinabove. The scope of the invention is defined by the appended claims.

### List of acronyms:

- MOCVD: Metal-organic chemical vapor deposition
- IBAD: Ion beam assisted deposition
- REBCO: Rare-earth barium copper oxide
- YBCO: Yttrium barium copper oxide

## Claims

1. A magnetic confinement device (300) comprising a plurality of modules coupled to each other, wherein each module (100; 100a, 100b) is adapted to conduct current in order to form a magnetic field and has:
- a first wall (110) having a connecting surface (102) adapted to engage a connecting surface of another module of the plurality of modules; and
- a groove (202) separating the first wall (110) into at least two different electrically conducting regions;
wherein each module (100) of the plurality of modules:
- comprises a second wall (112) assembled to the first wall (110) of said module, the groove (202) of said module being positioned between the first wall and the second wall; and
- is constructed as a stacking of different materials, comprising at least a superconducting layer (406) comprising a superconducting material, wherein the groove (202) of said module is patterned at least in the superconducting layer.

2. The magnetic confinement device according to claim 1, wherein the groove of at least a module of the plurality of modules is adapted to be connected to a groove of another module of the plurality of modules to form a continuous groove.

3. The magnetic confinement device according to claim 1 or 2, wherein the groove (202) is adapted to guide a flow of current into a certain direction, or into different paths, through the module.

4. The magnetic confinement device according to any one of claims 1 to 3, wherein at least a module (100) of the plurality of modules is mechanically and/or electrically coupled to another module of the plurality of modules, the connecting surface of the at least one module comprising a mechanical (108) and/or electrical connector (106) adapted to be coupled to a mechanical and/or electrical connector of the other module.

5. The magnetic confinement device according to claim 4, wherein the at least one module and the other module comprise each an electrical connector, the electrical connectors being positioned in order to accommodate a flow of current between said modules.

6. The magnetic confinement device according to any one of claims 1 to 5, wherein at least a module (100) of the plurality of modules comprises a channel (104) crossing through the first wall (110) of said module, for example to enable a cooling fluid, like nitrogen or helium, to flow through said module.

7. The magnetic confinement device according to claim 6, wherein the channel is adapted to form a single channel with a channel of another module of the plurality of modules.

8. The magnetic confinement device according to any one of claims 1 to 7, wherein the plurality of modules comprises first modules (100a) having a first shape, and second modules (100b) having a second shape, wherein the modules are mechanically coupled to each other, and:
- the first modules are electrically coupled to each other; and/or
- the second modules are electrically coupled to each other.

9. The magnetic confinement device according to claim 8, wherein the first and second modules are electrically coupled to each other.

10. The magnetic confinement device according to claim 8 or 9, wherein the direction and/or the intensity of the current flowing through the first modules (100a) and/or the second modules (100b) determines the shape of the magnetic field (302) in the magnetic confinement device.

11. The magnetic confinement device according to any one of claims 1 to 10, wherein the modules are arranged in a shape of a torus.

12. The magnetic confinement device according to any one of claims 1 to 11, wherein the modules are constructed to exhibit superconducting characteristics.

13. The magnetic confinement device according to any one of claims 1 to 12, wherein the superconducting material is a yttrium barium copper oxide or a rare-earth barium copper oxide.

14. The magnetic confinement device according to any one of claims 1 to 13, wherein the stacking comprises:
- a structural layer (414), preferably composed or covered by a material like Hastelloy;
- a plurality of buffer layers on the structural layer;
- the superconducting layer (406) on the plurality of buffer layers;
wherein the groove (202) is patterned in the buffer layers and the superconducting layer.

15. The magnetic confinement device according to claim 14, wherein the stacking further comprises:
- a shunt layer (404) on the superconducting layer and in the groove, the shunt layer being made of a metal, preferably silver.

16. The magnetic confinement device according to claim 15, wherein the stacking comprises a repeater layer under the shunt layer (404), the repeater layer being made of the repetition of the buffer and superconducting layers, and preferably several repetitions, preferably between 4 and 80 repetitions, the groove being patterned in the buffer layers, the superconducting layer and the repeater layer.

17. The magnetic confinement device according to claim 15 or 16, wherein the stacking comprises another superconducting layer (402), preferably a non-perforated and non-grooved layer, on the shunt layer (404), the other superconducting layer comprising a superconducting material like yttrium barium copper oxide or rare-earth barium copper oxide.

18. The magnetic confinement device according to any one of claims 14 to 17 in combination with claim 6 or 7, wherein the channel (104) of the at least one module goes through the structural layer (414).

19. A module (100; 100a; 100b) as defined in any one of claims 1 to 18 and being one of the plurality of modules configured to be coupled to each other to form the magnetic confinement device according to any one of claims 1 to 18.

## Patentansprüche

1. Eine magnetische Einschlussvorrichtung (300) mit einer Vielzahl von miteinander gekoppelten Modulen, wobei jedes Modul (100; 100a, 100b) dazu ausgelegt ist, Strom zu leiten, um ein Magnetfeld zu erzeugen, und Folgendes aufweisend:
- eine erste Wand (110) mit einer Verbindungsfläche (102), die dazu ausgelegt ist, mit einer Verbindungsfläche eines anderen Moduls der Vielzahl von Modulen in Eingriff zu kommen; und
- eine Nut (202), die die erste Wand (110) in mindestens zwei verschiedene elektrisch leitende Bereiche unterteilt;
wobei jedes Modul (100) der mehreren Module:
- eine zweite Wand (112) aufweist, die an der ersten Wand (110) des Moduls montiert ist, wobei die Nut (202) des Moduls zwischen der ersten Wand und der zweiten Wand positioniert ist; und
- als Stapelung verschiedener Materialien aufgebaut ist, die mindestens eine supraleitende Schicht (406) aus einem supraleitenden Material aufweist, wobei die Nut (202) des Moduls mindestens in der supraleitenden Schicht strukturiert ist.

2. Die magnetische Einschlussvorrichtung gemäß Anspruch 1, wobei die Nut mindestens eines Moduls der Vielzahl von Modulen so ausgelegt ist, dass sie mit einer Nut eines anderen Moduls der Vielzahl von Modulen verbunden werden kann, um eine durchgehende Nut zu bilden.

3. Die magnetische Einschlussvorrichtung gemäß Anspruch 1 oder 2, wobei die Nut (202) so ausgelegt ist, dass sie einen Stromfluss in eine bestimmte Richtung oder in verschiedene Pfade durch das Modul leitet.

4. Die magnetische Einschlussvorrichtung gemäß einem der Ansprüche 1 bis 3, wobei mindestens ein Modul (100) der Vielzahl von Modulen mechanisch und/oder elektrisch mit einem anderen Modul der Vielzahl von Modulen gekoppelt ist, wobei die Verbindungsfläche des mindestens einen Moduls einen mechanischen (108) und/oder elektrischen Verbinder (106) aufweist, der dazu ausgelegt ist, mit einem mechanischen und/oder elektrischen Verbinder des anderen Moduls gekoppelt zu werden.

5. Die magnetische Einschlussvorrichtung gemäß Anspruch 4, wobei das mindestens eine Modul und das andere Modul jeweils einen elektrischen Verbinder aufweisen, wobei die elektrischen Verbinder so positioniert sind, dass sie einen Stromfluss zwischen den Modulen ermöglichen.

6. Die magnetische Einschlussvorrichtung gemäß einem der Ansprüche 1 bis 5, wobei mindestens ein Modul (100) der Vielzahl von Modulen einen Kanal (104) aufweist, der durch die erste Wand (110) des Moduls verläuft, beispielsweise um ein Kühlfluid wie Stickstoff oder Helium durch das Modul strömen zu lassen.

7. Die magnetische Einschlussvorrichtung gemäß Anspruch 6, wobei der Kanal so ausgelegt ist, dass er mit einem Kanal eines anderen Moduls der Vielzahl von Modulen einen einzigen Kanal bildet.

8. Die magnetische Einschlussvorrichtung gemäß einem der Ansprüche 1 bis 7, wobei die Vielzahl von Modulen erste Module (100a) mit einer ersten Form und zweite Module (100b) mit einer zweiten Form aufweisen, wobei die Module mechanisch miteinander gekoppelt sind und:
- die ersten Module elektrisch miteinander gekoppelt sind; und/oder
- die zweiten Module elektrisch miteinander gekoppelt sind.

9. Die magnetische Einschlussvorrichtung gemäß Anspruch 8, wobei die ersten und zweiten Module elektrisch miteinander gekoppelt sind.

10. Die magnetische Einschlussvorrichtung gemäß Anspruch 8 oder 9, wobei die Richtung und/oder die Intensität des durch die ersten Module (100a) und/oder die zweiten Module (100b) fließenden Stroms die Form des Magnetfelds (302) in der magnetischen Einschlussvorrichtung bestimmt.

11. Die magnetische Einschlussvorrichtung gemäß einem der Ansprüche 1 bis 10, wobei die Module in Form eines Torus angeordnet sind.

12. Die magnetische Einschlussvorrichtung gemäß einem der Ansprüche 1 bis 11, wobei die Module so konstruiert sind, dass sie supraleitende Eigenschaften aufweisen.

13. Die magnetische Einschlussvorrichtung gemäß einem der Ansprüche 1 bis 12, wobei das supraleitende Material ein Yttrium-Barium-Kupferoxid oder ein Seltenerd-Barium-Kupferoxid ist.

14. Die magnetische Einschlussvorrichtung gemäß einem der Ansprüche 1 bis 13, wobei die Stapelung aufweist:
- eine Strukturschicht (414), vorzugsweise bestehend aus oder bedeckt mit einem Material wie Hastelloy;
- eine Vielzahl von Pufferschichten auf der Strukturschicht;
- die supraleitende Schicht (406) auf der Vielzahl von Pufferschichten;
wobei die Nut (202) in den Pufferschichten und der supraleitenden Schicht strukturiert ist.

15. Die magnetische Einschlussvorrichtung gemäß Anspruch 14, wobei die Schichtung ferner aufweist:
- eine Shunt-Schicht (404) auf der supraleitenden Schicht und in der Nut, wobei die Shunt-Schicht aus einem Metall, vorzugsweise Silber, besteht.

16. Die magnetische Einschlussvorrichtung gemäß Anspruch 15, wobei die Stapelung eine Wiederholungsschicht unter der Shunt-Schicht (404) aufweist, wobei die Wiederholungsschicht aus der Wiederholung der Puffer- und supraleitenden Schichten besteht, und vorzugsweise mehreren Wiederholungen, vorzugsweise zwischen 4 und 80 Wiederholungen, wobei die Nut in den Pufferschichten, der supraleitenden Schicht und der Wiederholungsschicht strukturiert ist.

17. Die magnetische Einschlussvorrichtung gemäß Anspruch 15 oder 16, wobei die Stapelung eine weitere supraleitende Schicht (402), vorzugsweise eine nicht perforierte und nicht genutete Schicht, auf der Shunt-Schicht (404) aufweist, wobei die weitere supraleitende Schicht ein supraleitendes Material wie Yttrium-Barium-Kupferoxid oder Seltenerd-Barium-Kupferoxid aufweist.

18. Die magnetische Einschlussvorrichtung gemäß einem der Ansprüche 14 bis 17 in Kombination mit Anspruch 6 oder 7, wobei der Kanal (104) des mindestens einen Moduls durch die Strukturschicht (414) verläuft.

19. Ein Modul (100; 100a; 100b), wie in einem der Ansprüche 1 bis 18 definiert und eines aus der Vielzahl von Modulen seiend, die so konfiguriert sind, dass sie miteinander gekoppelt werden können, um die magnetische Einschlussvorrichtung gemäß einem der Ansprüche 1 bis 18 zu bilden.

## Revendications

1. Dispositif de confinement magnétique (300) comprenant une pluralité de modules reliés les uns aux autres, dans lequel chaque module (100 ; 100a, 100b) est adapté pour conduire un courant afin de former un champ magnétique et a :
- une première paroi (110) ayant une surface de connexion (102) adaptée pour s'engager avec une surface de connexion d'un autre module de la pluralité de modules ; et
- une rainure (202) séparant la première paroi (110) en au moins deux régions électriquement conductrices différentes ;
dans lequel chaque module (100) de la pluralité de modules :
- comprend une deuxième paroi (112) assemblée à la première paroi (110) dudit module, la rainure (202) dudit module étant positionnée entre la première paroi et la deuxième paroi ; et
- est construit sous forme d'un empilement de différents matériaux, comprenant au moins une couche supraconductrice (406) comprenant un matériau supraconducteur, dans lequel la rainure (202) dudit module est structurée au moins dans la couche supraconductrice.

2. Dispositif de confinement magnétique selon la revendication 1, dans lequel la rainure d'au moins un module parmi la pluralité de modules est adaptée pour être connectée à une rainure d'un autre module de la pluralité de modules pour former une rainure continue.

3. Dispositif de confinement magnétique selon la revendication 1 ou 2, dans lequel la rainure (202) est adaptée pour guider un flux de courant dans une certaine direction, ou dans différents chemins, dans le module.

4. Dispositif de confinement magnétique selon l'une quelconque des revendications 1 à 3, dans lequel au moins un module (100) parmi la pluralité de modules est relié mécaniquement et/ou électriquement à un autre module de la pluralité de modules, la surface de connexion de l'au moins un module comprenant un connecteur mécanique (108) et/ou électrique (106) adapté pour être relié à un connecteur mécanique et/ou électrique de l'autre module.

5. Dispositif de confinement magnétique selon la revendication 4, dans lequel l'au moins un module et l'autre module comprennent chacun un connecteur électrique, les connecteurs électriques étant positionnés afin de permettre un flux de courant entre lesdits modules.

6. Dispositif de confinement magnétique selon l'une quelconque des revendications 1 à 5, dans lequel au moins un module (100) parmi la pluralité de modules comprend un canal (104) traversant la première paroi (110) dudit module, de préférence pour permettre à un fluide de refroidissement, comme l'azote ou l'hélium, de circuler dans ledit module.

7. Dispositif de confinement magnétique selon la revendication 6, dans lequel le canal est adapté pour former un canal unique avec un canal d'un autre module de la pluralité de modules.

8. Dispositif de confinement magnétique selon l'une quelconque des revendications 1 à 7, dans lequel la pluralité de modules comprend des premiers modules (100a) ayant une première forme et des deuxièmes modules (100b) ayant une deuxième forme, dans lequel les modules sont reliés mécaniquement les uns aux autres, et :
- les premiers modules sont reliés électriquement les uns aux autres ; et/ou
- les deuxièmes modules sont reliés électriquement les uns aux autres.

9. Dispositif de confinement magnétique selon la revendication 8, dans lequel les premiers et deuxièmes modules sont reliés électriquement les uns aux autres.

10. Dispositif de confinement magnétique selon la revendication 8 ou 9, dans lequel la direction et/ou l'intensité du courant circulant dans les premiers modules (100a) et/ou les deuxièmes modules (100b) détermine la forme du champ magnétique (302) dans le dispositif de confinement magnétique.

11. Dispositif de confinement magnétique selon l'une quelconque des revendications 1 à 10, dans lequel les modules sont disposés en forme de tore.

12. Dispositif de confinement magnétique selon l'une quelconque des revendications 1 à 11, dans lequel les modules sont construits pour présenter des caractéristiques supraconductrices.

13. Dispositif de confinement magnétique selon l'une quelconque des revendications 1 à 12, dans lequel le matériau supraconducteur est un oxyde de cuivre-baryum-yttrium ou un oxyde de cuivre-baryum-terres rares.

14. Dispositif de confinement magnétique selon l'une quelconque des revendications 1 à 13, dans lequel l'empilement comprend :
- une couche structurelle (414), de préférence composée ou recouverte d'un matériau comme l'Hastelloy ;
- une pluralité de couches tampons sur la couche structurelle ;
- la couche supraconductrice (406) sur la pluralité de couches tampons ;
dans lequel la rainure (202) est structurée dans les couches tampons et la couche supraconductrice.

15. Dispositif de confinement magnétique selon la revendication 14, dans lequel l'empilement comprend en outre :
- une couche de dérivation (404) sur la couche supraconductrice et dans la rainure, la couche de dérivation étant constituée d'un métal, de préférence de l'argent.

16. Dispositif de confinement magnétique selon la revendication 15, dans lequel l'empilement comprend une couche répétitive sous la couche de dérivation (404), la couche répétitive étant constituée de la répétition des couches tampon et supraconductrice, et de préférence plusieurs répétitions, de préférence entre 4 et 80 répétitions, la rainure étant gravée dans les couches tampons, la couche supraconductrice et la couche répétitive.

17. Dispositif de confinement magnétique selon la revendication 15 ou 16, dans lequel l'empilement comprend une autre couche supraconductrice (402), de préférence une couche non perforée et non rainurée, sur la couche de dérivation (404), l'autre couche supraconductrice comprenant un matériau supraconducteur comme l'oxyde de cuivre-baryum-yttrium ou l'oxyde de cuivre-baryum-terres rares.

18. Dispositif de confinement magnétique selon l'une quelconque des revendications 14 à 17 en combinaison avec la revendication 6 ou 7, dans lequel le canal (104) de l'au moins un modules traverse la couche structurelle (414).

19. Module (100 ; 100a ; 100b) tel que défini dans l'une quelconque des revendications 1 à 18 et qui est l'un parmi la pluralité de modules configurés pour être reliés les uns aux autres pour former le dispositif de confinement magnétique selon l'une quelconque des revendications 1 à 18.
